# DEMANDE DE BREVET EUROPEEN

(11) **EP 4 550 600 A1**
(43) Date de publication de la demande: **07.05.2025**
(21) Numéro de dépôt: 24209912.5
(22) Date de dépôt: 30.10.2024
(51) Int. Cl.: H02H 1/06, H02H 3/08, H01H 9/54, H02H 3/33

(54) **APPAREILLAGE DE PROTECTION A COUPURE ELECTRONIQUE**

(30) Priorité: 31.10.2023 FR 2311856
(71) Demandeur: Hager Next, 67210 Obernai (FR)
(72) Inventeur: GACEUS, Vincent, 67210 OBERNAI (FR); ZEISSLOFF, Thibaut, 67210 BERNADSWILLER (FR)
(74) Mandataire: Cabinet Nuss

(57) **Abrégé**

L'invention concerne un appareillage de protection à coupure électronique comprenant : une unité de coupure électronique (4) comprenant un composant électronique de coupure de puissance (5), un déclencheur électronique de protection (6) comprenant un module de commande (7) relié à un capteur de courant (3) et connecté directement à l'unité de coupure électronique (4), un module d'alimentation (9) connecté avec un premier transformateur de courant (8), ledit appareillage de protection est caractérisé en ce que ledit composant électronique de coupure de puissance (5) est configuré pour être piloté seulement par le signal de commande électrique du module de commande (7), le module de commande (7) est configuré pour piloter directement ledit composant électronique de coupure de puissance (5) à partir du signal de commande à condition que le courant d'alimentation entrant dans le module d'alimentation (9) en provenance du premier transformateur de courant (8) soit supérieur ou égal à un courant minimal d'auto alimentation prédéterminé inférieur au courant nominal, de sorte à ouvrir ledit composant électronique de coupure de puissance (5) et le rendre non-passant en cas d'apparition d'un défaut de type surcharge ou court-circuit.

## Description

La présente invention concerne le domaine des appareillages de protection à coupure électronique.

Des appareillages de protection à coupure électronique sont connus par exemple de la publication WO2022106527A1, pour lesquels il est nécessaire de prévoir une alimentation électrique reliée entre la ligne de courant de phase et la ligne de courant de neutre pour alimenter le déclencheur électronique de protection et faire fonctionner l'unité électronique de coupure. L'appareillage de protection à coupure électronique est par conséquent dit dépendant de la tension du réseau.

Toutefois, dans certaines conditions, il est souhaitable de pouvoir disposer d'un appareillage de protection à coupure électronique qui ne soit pas dépendant de la tension du réseau, mais au contraire soit indépendant de la tension du réseau, c'est-à-dire dont l'unité électronique de coupure puisse être commandée indépendamment de la tension du réseau.

La publication WO2023151869A1 divulgue un appareillage de commutation hybride ou électronique qui comprend un interrupteur semiconducteur normalement passant pouvant être piloté par un driver. En cas de survenue d'une différence de tension aux bornes du driver notamment en cas d'apparition d'un défaut différentiel et lorsque la source d'alimentation qui dépend de la tension du réseau n'est pas active, le driver commande l'ouverture dudit interrupteur semiconducteur. Toutefois, en cas de défaut non différentiel par exemple de type court-circuit, cette configuration ne fonctionne pas de façon optimale en l'absence de tension, car en cas de court-circuit en aval du disjoncteur la tension est nulle ou très faible à ses bornes.

La publication EP4167261 A1 décrit un dispositif de protection électrique utilisant également des transistors passants par défaut et dont l'ouverture peut être commandée par le module de commande indirectement par un actionneur et un organe de commande en cas d'apparition d'un arc électrique aux bornes de l'organe de commutation et directement par un circuit auxiliaire de commande alimenté par une alimentation et venant en complément seulement du module de commande si celui-ci prend trop de temps pour piloter les transistors en cas de court-circuit. Cette configuration présente les désavantages d'utiliser un arc électrique et de nécessiter de disposer d'un ensemble de contacts mécanique supplémentaire.

La présente invention a pour but de pallier au moins l'un de ces inconvénients et vise à proposer un appareillage de protection à coupure électronique permettant une coupure électronique et donc sans génération d'arc électrique en cas d'apparition au moins d'un défaut de type surcharge ou court-circuit et qui soit indépendant de la tension du réseau.

A cet effet, l'invention concerne un appareillage de protection à coupure électronique comprenant au moins :
- une ligne de courant de phase entre une première borne de raccordement de phase et une deuxième borne de raccordement de phase,
- un capteur de courant pour mesurer le courant circulant dans la ligne pour émettre un signal représentatif de l'image de courant de phase,
- une unité de coupure électronique comprenant au moins un composant électronique de coupure de puissance normalement passant disposé sur ladite ligne de courant de phase,
- un déclencheur électronique de protection comprenant au moins un module de commande relié au capteur de courant et connecté directement à l'unité de coupure électronique, et étant configuré au moins pour traiter ledit signal représentatif de l'image de courant de phase et le cas échéant pour émettre un signal de commande électrique pour piloter directement l'ouverture dudit au moins un composant électronique de coupure de puissance en cas d'apparition d'un défaut au moins de type surcharge ou court-circuit,
- un premier transformateur de courant disposé exclusivement sur la ligne de courant de phase,
- un module d'alimentation connecté avec le premier transformateur de courant et étant configuré pour être alimenté par l'énergie provenant dudit premier transformateur de courant et pour transformer le courant alternatif provenant dudit premier transformateur de courant et fournir au moins une tension de fonctionnement, et étant en outre connecté au déclencheur électronique de protection de sorte à permettre son alimentation, le déclencheur électronique de protection étant configuré pour être alimenté par ledit module d'alimentation à partir de ladite au moins une tension de fonctionnement indépendamment de la tension du réseau,

ledit appareillage de protection est caractérisé en ce que :
- ledit au moins un composant électronique de coupure de puissance est configuré pour être piloté seulement par le signal de commande électrique du module de commande,
- le module de commande est configuré pour piloter directement ledit au moins un composant électronique de coupure de puissance à partir du signal de commande à condition que le courant d'alimentation entrant dans le module d'alimentation en provenance du premier transformateur de courant soit supérieur ou égal à un courant minimal d'auto alimentation prédéterminé inférieur au courant nominal, de sorte à ouvrir ledit au moins un composant électronique de coupure de puissance et le rendre non-passant en cas d'apparition d'un défaut de type surcharge ou court-circuit.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
[ Fig. 1] la figure 1 représente un schéma électrique de l'appareillage de protection à coupure électronique selon une première variante de l'invention protégeant contre les défauts de type surcharge ou court-circuit, et
[ Fig. 2] la figure 2 représente un schéma électrique de l'appareillage de protection à coupure électronique selon une deuxième variante de l'invention protégeant contre les défauts de type surcharge ou court-circuit ou différentiel.

L'invention concerne un appareillage de protection à coupure électronique comprenant au moins :
- une ligne de courant de phase L entre une première borne de raccordement de phase 1 et une deuxième borne de raccordement de phase 2,
- un capteur de courant 3 pour mesurer le courant circulant dans la ligne pour émettre un signal représentatif de l'image de courant de phase L,
- une unité de coupure électronique 4 comprenant au moins un composant électronique de coupure de puissance 5 normalement passant disposé sur ladite ligne de courant de phase L,
- un déclencheur électronique de protection 6 comprenant au moins un module de commande 7 relié au capteur de courant 3 et connecté directement à l'unité de coupure électronique 4, et étant configuré au moins pour traiter ledit signal représentatif de l'image de courant de phase L et le cas échéant pour émettre un signal de commande électrique pour piloter directement l'ouverture dudit au moins un composant électronique de coupure de puissance 5 en cas d'apparition d'un défaut au moins de type surcharge ou court-circuit,
- un premier transformateur de courant 8 disposé exclusivement sur la ligne de courant de phase L,
- un module d'alimentation 9 connecté avec le premier transformateur de courant 8 et étant configuré pour être alimenté par l'énergie provenant dudit premier transformateur de courant 8 et pour transformer le courant alternatif provenant dudit premier transformateur de courant 8 et fournir au moins une tension de fonctionnement, et étant en outre connecté au déclencheur électronique de protection 6 de sorte à permettre son alimentation, le déclencheur électronique de protection 6 étant configuré pour être alimenté par ledit module d'alimentation 9 à partir de ladite au moins une tension de fonctionnement indépendamment de la tension du réseau.

Conformément à l'invention ledit appareillage de protection est caractérisé en ce que :
- ledit au moins un composant électronique de coupure de puissance 5 est configuré pour être piloté seulement par le signal de commande électrique du module de commande 7,
- le module de commande 7 est configuré pour piloter directement ledit au moins un composant électronique de coupure de puissance 5 à partir du signal de commande à condition que le courant d'alimentation entrant dans le module d'alimentation 9 en provenance du premier transformateur de courant 8 soit supérieur ou égal à un courant minimal d'auto alimentation prédéterminé inférieur au courant nominal, de sorte à ouvrir ledit au moins un composant électronique de coupure de puissance 5 et le rendre non-passant en cas d'apparition d'un défaut de type surcharge ou court-circuit.

Avantageusement, grâce à l'invention il est possible de proposer un appareillage de protection à coupure électronique permettant une coupure électronique et donc sans génération d'arc électrique en cas d'apparition au moins d'un défaut de type surcharge ou court-circuit et qui soit auto-alimenté au moins par le premier transformateur de courant 8 sous certaines conditions et donc indépendamment de la tension du réseau. En effet, le module de commande 7 pilote directement ledit au moins un composant électronique de coupure de puissance 5 à partir du signal de commande à condition que le courant d'alimentation entrant dans le module d'alimentation 9 en provenance du premier transformateur de courant 8 soit supérieur ou égal au courant minimal d'auto-alimentation prédéterminé inférieur au courant nominal. Autrement dit dans ces conditions, l'énergie provenant du premier transformateur de courant 8 est suffisante pour faire fonctionner au moins l'électronique du module de commande 7 et de l'unité de coupure électronique 4. Il en résulte en cas d'apparition d'un défaut de type surcharge ou court-circuit l'ouverture dudit au moins un composant électronique de coupure de puissance 5 normalement passant ce qui permet de le rendre non-passant. Par ailleurs, ledit au moins un composant électronique de coupure de puissance 5 normalement passant, qui peut avantageusement fonctionner à basse consommation, peut être auto-alimenté avant l'apparition d'un défaut de type surcharge ou court-circuit, indépendamment de la tension du réseau dans les conditions précitées. Il en résulte que l'appareillage de protection à coupure électronique selon l'invention peut fonctionner en l'absence de ligne de courant de neutre N, et donc que l'invention peut s'appliquer à des appareillages de protection à coupure électronique unipolaires ou multipolaires. L'invention s'applique au moins avantageusement à un disjoncteur statique avec protection contre au moins les défauts de type surcharge ou court-circuit indépendamment de la tension du réseau.

Le module de commande 7 pilote directement ledit au moins un composant électronique de coupure de puissance 5 normalement passant, c'est-à-dire que contrairement à l'art antérieur cité, la commande dudit au moins un composant électronique de coupure de puissance 5 normalement passant se fait sans composants intermédiaires entre eux, par exemple de type actionneur et un organe de commutation.

Ledit au moins un composant électronique de coupure de puissance 5 normalement passant est configuré pour être piloté seulement par le signal de commande électrique du module de commande 7, c'est-à-dire que la commande dudit au moins un composant électronique de coupure de puissance 5 se fait uniquement au moyen du signal de commande émanant du module de commande 7 et qu'une autre voie de commande ne peut pas être envisagée comme c'est le cas dans l'art antérieur cité.

De préférence, ledit appareillage de protection à coupure électronique comprend en outre un actionneur 10 relié électriquement au module de commande 7, un mécanisme d'isolation galvanique 11 comprenant au moins un premier ensemble de contacts séparables 12 avec un premier contact fixe 13 et un premier contact mobile 14 disposés sur la ligne de courant de phase L et l'actionneur 10 est configuré pour actionner l'ouverture du premier ensemble de contacts séparables 12 consécutivement à l'ouverture dudit au moins un composant électronique de coupure de puissance 5.

Avantageusement, cette configuration permet de garantir l'isolation de l'appareillage de protection à coupure électronique en cas d'ouverture dudit au moins un composant électronique de coupure de puissance 5 suite à l'apparition d'un défaut en coupant la ligne de courant de phase L.

De préférence, ledit appareillage de protection à coupure électronique comprend en outre une ligne de courant de neutre N entre une première borne de raccordement de neutre 15 et une deuxième borne de raccordement de neutre 16.

Avantageusement, cette configuration permet de proposer des appareillages de protection à coupure électronique avec en outre une ligne de courant de neutre N, ce qui est notamment nécessaire pour détecter un défaut de type différentiel.

De préférence, le mécanisme d'isolation galvanique 11 comprend en outre un deuxième ensemble de contacts séparables 17 avec un deuxième contact fixe 18 et un deuxième contact mobile 19 disposés sur la ligne de courant de neutre N et l'actionneur 10 est configuré pour actionner l'ouverture du premier ensemble de contacts séparables 12 et du deuxième ensemble de contacts séparables 17 consécutivement à l'ouverture dudit au moins un composant électronique de coupure 5.

Avantageusement, cette configuration permet de garantir l'isolation de l'appareillage de protection à coupure électronique en cas d'ouverture dudit au moins un composant électronique de coupure de puissance 5 suite à l'apparition d'un défaut en coupant la ligne de courant de phase L et la ligne de courant de neutre N.

De préférence, l'appareillage de protection à coupure électronique comprend en outre un capteur de courant différentiel 20 configuré pour mesurer le courant différentiel circulant entre ladite ligne de courant de phase L et la ligne de courant de neutre N et pour émettre un signal représentatif de l'image du courant de défaut différentiel entre la ligne de courant de phase L et la ligne de courant de neutre N.

Avantageusement, dans ce cas l'appareillage de protection à coupure électronique est configuré pour détecter en outre un défaut différentiel.

De préférence, ledit actionneur 10 est relié électriquement au capteur de courant différentiel 20 et si le courant d'alimentation entrant dans le module d'alimentation 9 est inférieur au courant minimal d'auto alimentation prédéterminé de sorte que le déclencheur électronique de protection 6 n'est pas alimenté suffisamment par le module d'alimentation 9 pour assurer son fonctionnement, l'actionneur 10 est configuré pour traiter ledit signal représentatif de l'image du courant de défaut différentiel et le cas échéant émettre un signal de commande de déclenchement de protection représentatif de l'apparition d'un défaut différentiel pour actionner l'ouverture du premier ensemble de contacts séparables 12 et du deuxième ensemble de contacts séparables 17 en cas d'apparition d'un défaut différentiel.

L'invention s'applique en outre avantageusement à un disjoncteur différentiel statique avec protection contre les défauts de type surcharge ou court-circuit ou différentiel. Dans ce cas, un déclenchement de l'appareillage de protection à coupure électronique est possible même si le module d'alimentation 9 n'est pas alimenté suffisamment. En effet, l'énergie du défaut différentiel permet de déclencher l'actionneur 10 et la coupure intervient par l'intermédiaire de l'actionneur 10 en lien avec le capteur de courant différentiel 20, l'actionneur 10 actionnant le premier ensemble de contacts séparables 12 et le deuxième ensemble de contacts séparables 17, et non par l'intermédiaire du module de commande 7 et de l'unité de coupure électronique 4. Dans cette configuration, ni l'électronique de l'unité de coupure électronique 4, ni le module de commande 7 n'est active pour la protection contre un défaut différentiel.

De préférence, si le courant d'alimentation entrant dans le module d'alimentation 9 est supérieur ou égal au courant minimal d'auto alimentation prédéterminé, le module de commande 7 est configuré pour traiter ledit signal représentatif de l'image du courant de défaut différentiel et le cas échéant émettre un signal de commande différentiel pour piloter directement l'ouverture dudit au moins un composant électronique de coupure de puissance 5 puis consécutivement pour piloter ledit actionneur 10, lequel est configuré pour actionner l'ouverture du premier ensemble de contacts séparables 12 et du deuxième ensemble contacts séparables 17 en cas d'apparition d'un défaut différentiel.

L'invention s'applique en outre avantageusement à un disjoncteur différentiel statique avec protection contre les défauts de type surcharge ou court-circuit ou différentiel. Dans ce cas, un déclenchement de l'appareillage de protection à coupure électronique est aussi possible si le module d'alimentation 9 est alimenté suffisamment indépendamment de la tension du réseau, c'est-à-dire à condition que le courant d'alimentation entrant dans le module d'alimentation 9 soit supérieur ou égal au courant minimal d'auto-alimentation prédéterminé. L'énergie du défaut différentiel n'est pas utilisée pour déclencher l'actionneur 10, mais celle du module d'alimentation 9 est utilisée. En cas d'apparition d'un défaut de type différentiel, il en résulte l'ouverture dudit au moins un composant électronique de coupure de puissance 5 normalement passant ce qui permet de le rendre non-passant. Puis, la coupure galvanique peut alors intervenir par l'intermédiaire de l'actionneur 10 piloté par le module de commande 7, l'actionneur 10 actionnant l'ouverture du premier ensemble de contacts séparables 12 et du deuxième ensemble de contacts séparables 17. L'électronique du module de commande 7 est dans ces conditions aussi active pour la protection contre un défaut différentiel.

De préférence, l'appareillage de protection à coupure électronique comprend en outre un deuxième transformateur de courant 21 disposé exclusivement sur la ligne de courant de neutre N et le module d'alimentation 9 est connecté avec le deuxième transformateur de courant 21 et est configuré pour être alimenté par l'énergie provenant dudit deuxième transformateur de courant 21 et pour transformer le courant alternatif provenant dudit deuxième transformateur de courant 21 et fournir ladite au moins une tension de fonctionnement.

L'énergie provenant du deuxième transformateur de courant 21 permet d'alimenter le module d'alimentation 9 pour faire fonctionner l'électronique du déclencheur électronique de protection 6 et de l'unité de coupure électronique 4.

De préférence, le module d'alimentation 9 est configuré pour être alimenté exclusivement par l'énergie provenant dudit premier transformateur de courant 8 et dudit deuxième transformateur de courant 21 à partir de ladite au moins une tension de fonctionnement.

Dans ce cas, seule l'énergie provenant du premier transformateur de courant 8 et du deuxième transformateur de courant 21 permet d'alimenter le module d'alimentation 9 pour faire fonctionner l'électronique du déclencheur électronique de protection 6 et de l'unité de coupure électronique 4.

De préférence, le module de commande 7 est configuré pour intégrer à partir du signal représentatif de l'image du courant circulant dans ladite ligne de courant de phase L des données représentatives de la mesure du courant circulant dans la ligne de courant de phase L à condition que le courant d'alimentation entrant dans le module d'alimentation 9 soit supérieur ou égal au courant minimal d'auto-alimentation prédéterminé.

Avantageusement, dans ce cas l'appareillage de protection à coupure électronique est configuré pour mesurer le courant circulant dans la ligne de courant de phase L à l'aide du premier capteur de courant 3 et d'intégrer dans le module de commande 7 des données s'y rapportant.

De préférence, l'appareillage de protection à coupure électronique comprend en outre un capteur de tension 22 relié électriquement à la ligne de courant de phase L et à la ligne de courant de neutre N configuré pour mesurer la tension entre la ligne de courant de phase L et la ligne de courant de neutre N et émettre un signal représentatif de la tension et le module de commande 7 est configuré pour intégrer à partir du signal représentatif de la tension des données représentatives de la mesure de la tension à condition que le courant d'alimentation entrant dans le module d'alimentation 9 soit supérieur ou égal au courant minimal d'auto-alimentation prédéterminé.

Avantageusement, dans ce cas l'appareillage de protection à coupure électronique est configuré pour mesurer la tension entre la ligne de courant de phase L et la ligne de courant de neutre N à l'aide du capteur de tension 22 et d'intégrer dans le module de commande 7 des données s'y rapportant.

De préférence, le déclencheur électronique de protection 6 comprend en outre un module de communication 23 configuré pour communiquer de préférence sans fil les données représentatives de la mesure du courant circulant dans la ligne de courant de phase L et/ou la mesure de la tension et/ou les mesures de puissance et d'énergie réalisées par la combinaison des mesures de courant et de tension à condition que le courant d'alimentation entrant dans le module d'alimentation 9 soit supérieur ou égal au courant minimal d'auto-alimentation prédéterminé.

Avantageusement, dans ce cas l'appareillage de protection à coupure électronique est configuré pour communiquer les données intégrées dans le déclencheur électronique de protection 6 représentatives de la mesure du courant circulant dans la ligne de courant de phase L et/ou la mesure de la tension et/ou les mesures de puissance et d'énergie réalisées par la combinaison des mesures de courant et de tension.

De préférence, ledit au moins un composant électronique de coupure de puissance 5 normalement passant comprend au moins un transistor de puissance et préférentiellement au moins un FET et de préférence un JFET.

En absence de défaut, ledit au moins un composant électronique de coupure de puissance 5 normalement passant n'est pas commandé par le module de commande 7 et permet le passage du courant dans la ligne de phase L. En revanche, en cas d'apparition d'un défaut, le module de commande 7 transmet le signal de commande sous la forme d'une différence de potentiel aux bornes dudit au moins un composant électronique de coupure de puissance 5, ce qui a pour conséquence de commander l'ouverture de ce dernier. Il en résulte que le passage du courant dans la ligne de phase L est interrompu, car ledit au moins un composant électronique de coupure de puissance 5 est passé dans l'état non passant.

De préférence, le module d'alimentation 9 est configuré pour être alimenté exclusivement par l'énergie provenant dudit premier transformateur de courant 8.

Avantageusement, le module d'alimentation 9 ne peut pas être alimenté par une autre source que le premier transformateur de courant 8.

De manière alternative, le module d'alimentation 9 est configuré pour être alimenté en outre par l'énergie provenant d'une source d'alimentation auxiliaire de préférence si le courant d'alimentation entrant dans le module d'alimentation 9 en provenance du premier transformateur de courant 8 est inférieur au courant minimal d'auto-alimentation.

Avantageusement, dans certaines conditions le module d'alimentation 9 peut être alimenté par une source auxiliaire et donc une source qui est différente notamment du premier transformateur de courant 8 et le cas échéant du deuxième transformateur de courant 21. Cela est d'autant plus utile que si le courant d'alimentation entrant dans le module d'alimentation 9 en provenance du premier transformateur de courant 8 est inférieur au courant minimal d'auto-alimentation, alors l'électronique du déclencheur électronique de protection 6 et de l'unité de coupure électronique 4 ne peut fonctionner avec l'énergie provenant du premier transformateur de courant 8 et le cas échéant du deuxième transformateur de courant 21, la source auxiliaire peut alors venir en relais dans ces conditions.

De préférence, le déclencheur électronique de protection 6 est configuré pour être alimenté exclusivement par ledit module d'alimentation 9 indépendamment de la tension du réseau.

Dans ces conditions, il n'est pas possible d'envisager d'alimenter directement l'électronique du déclencheur électronique de protection 6 par exemple par une source auxiliaire, cette source auxiliaire pouvant être indépendante ou non de la tension du réseau, ou à l'aide de la tension du réseau.

De préférence, le module d'alimentation 9 est configuré pour être alimenté en outre par la tension entre la ligne de courant de phase L et la ligne de courant de neutre N de préférence si le courant d'alimentation entrant dans le module d'alimentation 9 en provenance du premier transformateur de courant 8 est inférieur au courant minimal d'auto-alimentation.

Avantageusement, dans certaines conditions le module d'alimentation 9 peut être alimenté par la tension du réseau. Cela est d'autant plus utile que si le courant d'alimentation entrant dans le module d'alimentation 9 en provenance du premier transformateur de courant 8 et le cas échéant du deuxième transformateur de courant 21 est inférieur au courant minimal d'auto-alimentation, alors l'électronique du déclencheur électronique de protection 6 et de l'unité de coupure électronique 4 ne peut fonctionner avec l'énergie provenant du premier transformateur de courant 8 et le cas échéant du deuxième transformateur de courant 21, la tension du réseau peut alors venir en relais dans ces conditions.

Le courant minimal d'auto-alimentation prédéterminé est indispensablement inférieur au courant nominal de produit de protection, de sorte que l'électronique de protection puisse être opérationnel avant l'éventuelle apparition d'un défaut de type surcharge ou de type court-circuit.

Le courant nominal correspond au calibre de l'appareil de protection, sans "derating" du fait d'un réglage de l'utilisateur ou de conditions environnementales sévères comme une température de fonctionnement ou une altitude élevées.

De préférence, le capteur de courant 3 est de préférence un capteur tel qu'un shunt ou Résistance de très faible valeur ohmique ou un transformateur de courant de type tore ou Rogowski.

Le déclencheur électronique de protection 6 est relié au module d'alimentation 9 pour permettre l'alimentation de l'électronique de son module de commande 7 et le cas échéant de son module de communication 23.

Le module de commande 7 du déclencheur électronique de protection 6 est relié électriquement à l'unité de coupure électronique 4 et le cas échéant à l'actionneur 10. Par exemple, le module de commande 7 peut comprendre au moins un microcontrôleur et au moins un driver de puissance qui émet les différents signaux de commande à l'unité de coupure électronique 4 et le cas échéant à l'actionneur 10. Le module de commande 7 est en outre relié au capteur de courant 3, et le cas échéant au capteur de tension 22. Le microcontrôleur peut intégrer les données de mesures de ces capteurs de courant/tension 3, 22. Le module de commande 7 est en outre relié au module de communication 23 pour transmettre lesdites données par exemple à une interface homme machine distante ou intégrée.

Le module de communication 23 du déclencheur électronique de protection 6 peut comprendre des moyens de communications filaires ou sans fil par ondes électromagnétiques du type émetteur-récepteur ou équivalent.

Le module de commande 7, et le cas échéant le module de communication 23, et l'unité de coupure électronique 4 peuvent respectivement comprendre une ou plusieurs cartes électroniques. Le module de commande 7, et le cas échéant le module de communication 23, et l'unité de coupure électronique 4 pourraient comprendre de manière alternative une unique carte électronique comprenant ledit microcontrôleur et ledit driver de puissance et ledit au moins un composant électronique de coupure de puissance 5.

L'unité de coupure électronique 4 peut comprendre un premier ensemble E1 de composant électronique de coupure de puissance 5 et un deuxième ensemble E2 de composant électronique de coupure de puissance 5 qui sont de préférence montés en série, par exemple de façon tête-bêche, sur la ligne de courant de phase P.

Dans les exemples illustrés, le premier ensemble E1 et le deuxième ensemble E2 comptent chacun au moins un composant électronique de coupure de puissance 5. Ces exemples ne sont pas limitatifs.

Le premier transformateur de courant 8 peut être de type tore.

Le deuxième transformateur de courant 21 peut être de type tore.

Le capteur de courant différentiel 20 peut être de type tore.

Le module d'alimentation 9 peut comprendre un convertisseur de courant AC/DC et un circuit pour le stockage local d'énergie.

L'actionneur 10 peut consister en un actionneur électromagnétique.

Le capteur de tension peut être de type pont diviseur de tension à impédances chutrices.

L'organe d'actionnement 24, qui peut être sous la forme d'une manette, permet d'actionner l'ouverture et la fermeture des premier et deuxième ensembles de contacts séparables 12, 17. Cet organe d'actionnement 24 peut adopter une position ouverte en cas d'ouverture des premier et deuxième ensembles de contacts séparables 12, 17 et une position fermée en cas de fermeture des premier et deuxième ensembles de contacts séparables 12, 17.

L'appareillage de protection à coupure électronique comprend de préférence un boîtier (non représenté) dans lequel sont logés les différents composants.

Le boîtier présente de préférence une forme globalement parallélépipédique avec une largeur, c'est-à-dire l'écart entre les faces principales, égale à un nombre entier de fois une distance prédéterminée, appelée module valant généralement environ 18 millimètres.

Grâce à cette disposition avantageuse, le format du boîtier est modulaire et il en résulte un appareillage de protection à coupure électronique modulaire.

L'appareillage de protection à coupure électronique modulaire peut être un disjoncteur modulaire statique du type SCCB (Semi Conductor Circuit Breaker) ou un disjoncteur différentiel modulaire statique SC-RCBO (Semi Conductor Residual current Circuit Breaker with Overload).

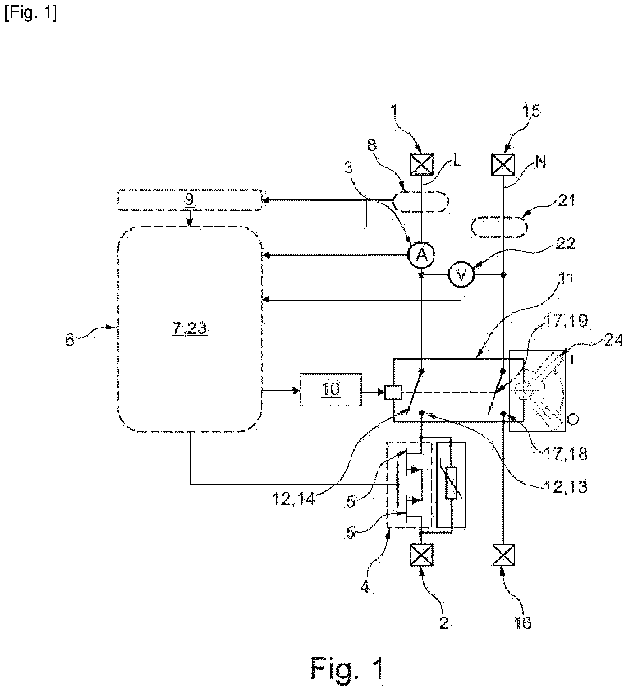

La figure 1 représente un schéma électrique de l'appareillage de protection à coupure électronique selon une première variante de l'invention et protégeant contre les défauts de type surcharge ou court-circuit. L'appareillage de protection à coupure électronique comprend une ligne de courant de phase L et une ligne de courant de neutre N. La ligne de courant de phase L est entourée par le premier transformateur de courant 8 et est associée au capteur de courant 3. La ligne de courant de neutre N est entourée par le deuxième transformateur de courant 21. Le capteur de tension 22 est relié électriquement entre la ligne de courant de phase L et la ligne de courant de neutre N. La ligne de courant de phase L est munie du premier ensemble de contacts séparables 12 et de l'unité de coupure électronique 4 lesquels sont reliés électriquement en série. L'unité de coupure électronique 4 comprend au moins deux transistors à effet de champ de type JFET en série et tête bêche. La ligne de courant de neutre N est munie du deuxième ensemble de contacts séparables 17. L'appareillage de protection à coupure électronique comprend l'actionneur 10 relié aux premier et deuxième ensembles de contacts séparables 12, 17. Le premier transformateur de courant 8 et le deuxième transformateur de courant 21 sont reliés électriquement au module d'alimentation 9. Le déclencheur électronique de protection 6 comprend le module de commande 7 et le module de communication 23. Le déclencheur électronique de protection 6 est relié au module d'alimentation 9 pour permettre l'alimentation de l'électronique de son module de commande 7 et de son module de communication 23. Le module de commande 7 du déclencheur électronique de protection 6 est relié électriquement à l'unité de coupure électronique 4 et à l'actionneur 10 pour les commander. Le module de commande 7 est en outre relié au capteur de courant 3 et au capteur de tension 22 et reçoit les signaux représentatifs de l'image de courant de phase L et de la tension entre la ligne de courant de phase L et la ligne de courant de neutre N. L'appareillage de protection à coupure électronique correspond à un disjoncteur à coupure électronique phase neutre qui garantit une protection contre les défauts de type court-circuit ou surcharge et qui est indépendant de la tension du réseau. En effet, le premier transformateur de courant 8 et le deuxième transformateur de courant 21 permettent à partir respectivement du courant circulant dans la ligne de courant de phase L et dans la ligne de courant de neutre N d'alimenter le module d'alimentation 9. Ce dernier permet de transformer le courant alternatif provenant dudit premier transformateur de courant 8 et du deuxième transformateur de courant 21 et de fournir ladite au moins une tension de fonctionnement au déclencheur électronique de protection 6, de sorte à permettre son alimentation. Ainsi le déclencheur électronique de protection 6 est alimenté seulement par ledit module d'alimentation 9 à partir de ladite au moins une tension de fonctionnement indépendamment de la tension du réseau. Si le courant d'alimentation entrant dans le module d'alimentation 9 en provenance du premier transformateur de courant 8 et du deuxième transformateur de courant 21 est supérieur ou égal au courant minimal d'auto-alimentation prédéterminé, et si un défaut de type court-circuit ou surcharge sur la ligne de courant de phase L apparaît alors le capteur de courant 3 mesure le signal représentatif de l'image de courant de phase L et le transmet au module de commande 7 qui compare ce signal à un seuil représentatif d'un courant de défaut et peut alors émettre le signal de commande. Ainsi en cas d'apparition d'un défaut de type surcharge ou court-circuit, le module de commande 7 transmet à l'unité de coupure électronique 4 le signal de commande, sous la forme d'une différence de potentiel, pour piloter directement l'ouverture des composants électroniques de coupure de puissance 5 de type JFET. Les deux JFET passent d'un état passant à un état non passant. Puis consécutivement, le module de commande 7 pilote l'actionneur 10 qui actionne l'ouverture des premier et deuxième ensembles de contacts séparables 12, 17. L'organe d'actionnement 24 bascule de la position fermée vers la position ouverte ce qui permet d'indiquer la présence d'une défaut et de de protéger les installations contre les défauts électriques de type surcharge et court-circuit. Si le courant d'alimentation entrant dans le module d'alimentation 9 en provenance du premier transformateur de courant 8 et du deuxième transformateur de courant 21 est supérieur ou égal au courant minimal d'auto-alimentation prédéterminé, le module de commande 7 peut également transmettre au module de communication 23 les données représentatives de la mesure du courant circulant dans la ligne de courant de phase L et/ou la mesure de la tension et/ou les mesures de puissance et d'énergie réalisées par la combinaison des mesures de courant et de tension par l'intermédiaire du capteur de courant 3 et/ou du capteur de tension 22. Le module de communication 23 peut ensuite transmettre ces données à une interface homme machine distante ou intégrée dans l'appareillage de protection à coupure électronique. Si le courant d'alimentation entrant dans le module d'alimentation 9 en provenance du premier transformateur de courant 8 et du deuxième transformateur de courant 21 est inférieur au courant minimal d'auto-alimentation prédéterminé, alors le déclencheur électronique de protection 6 est hors de fonctionnement.

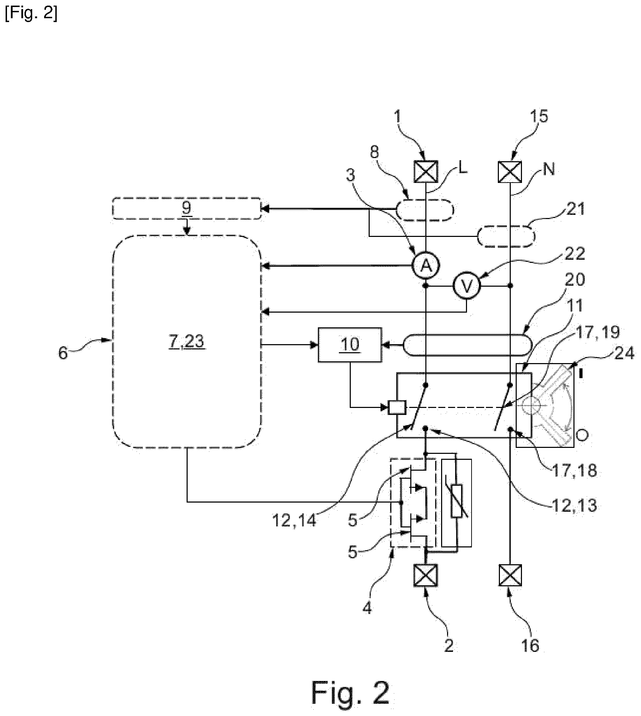

La figure 2 représente un schéma électrique de l'appareillage de protection à coupure électronique selon une deuxième variante de l'invention et protégeant contre les défauts de type surcharge ou court-circuit ou différentiel. L'appareillage de protection à coupure électronique est sensiblement identique à celui de la figure 1 et comprend seulement en plus un capteur de courant différentiel 20 sous la forme d'un troisième transformateur de courant qui entoure la ligne de courant de phase L et la ligne de courant de neutre N et qui est relié à l'actionneur 10. L'appareillage de protection à coupure électronique correspond à un disjoncteur différentiel à coupure électronique phase neutre qui garantit une protection contre les défauts de type court-circuit ou surcharge ou différentiel et qui est indépendant de la tension du réseau. Si le courant d'alimentation entrant dans le module d'alimentation 9 en provenance du premier transformateur de courant 8 et du deuxième transformateur de courant 21 est supérieur ou égal au courant minimal d'auto-alimentation prédéterminé, et si un défaut différentiel entre la ligne de courant de phase L et la ligne de courant de neutre N apparaît alors le capteur de courant différentiel 20 mesure le signal représentatif de l'image du courant de défaut différentiel et le transmet au module de commande 7 qui compare ce signal à un seuil représentatif d'un courant de défaut et peut alors émettre le signal de commande différentiel. Ainsi en cas d'apparition d'un défaut de type surcharge ou court-circuit ou différentiel, le module de commande 7 transmet à l'unité de coupure électronique 4 le signal de commande correspondant, sous la forme d'une différence de potentiel pour piloter directement l'ouverture des composants électroniques de coupure de puissance 5 de type JFET. Les deux JFET passent d'un état passant à un état non passant. Puis consécutivement, le module de commande 7 pilote l'actionneur 10 qui actionne l'ouverture des premier et deuxième ensembles de contacts séparables 12, 17. L'organe d'actionnement 24 bascule de la position fermée vers la position ouverte ce qui permet d'indiquer la présence d'un défaut et de protéger les installations électriques de défaut contre les surcharge et court-circuit, et les êtres vivants contre les défauts différentiels (contre les chocs électriques indirects). Si le courant d'alimentation entrant dans le module d'alimentation 9 en provenance du premier transformateur de courant 8 et du deuxième transformateur de courant 21 est inférieur au courant minimal d'auto-alimentation prédéterminé, alors le déclencheur électronique de protection 6 est hors de fonctionnement. Toutefois, seule une détection d'un défaut différentiel par l'énergie du défaut reste possible. En effet, dans ce cas le déclencheur électronique de protection 6 n'est pas alimenté suffisamment par le module d'alimentation 9 pour assurer son fonctionnement, mais à la place l'actionneur 10 traite ledit signal représentatif de l'image du courant de défaut différentiel et émet alors le signal de commande de déclenchement de protection représentatif de l'apparition d'un défaut différentiel pour actionner l'ouverture du premier ensemble de contacts séparables 12 et du deuxième ensemble de contacts séparables 17 en cas d'apparition d'un défaut différentiel.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Appareillage de protection à coupure électronique comprenant au moins :
- une ligne de courant de phase (L) entre une première borne de raccordement de phase (1) et une deuxième borne de raccordement de phase (2),
- un capteur de courant (3) pour mesurer le courant circulant dans la ligne pour émettre un signal représentatif de l'image de courant de phase (L),
- une unité de coupure électronique (4) comprenant au moins un composant électronique de coupure de puissance (5) normalement passant disposé sur ladite ligne de courant de phase (L),
- un déclencheur électronique de protection (6) comprenant au moins un module de commande (7) relié au capteur de courant (3) et connecté directement à l'unité de coupure électronique (4), et étant configuré au moins pour traiter ledit signal représentatif de l'image de courant de phase (L) et le cas échéant pour émettre un signal de commande électrique pour piloter directement l'ouverture dudit au moins un composant électronique de coupure de puissance (5) en cas d'apparition d'un défaut au moins de type surcharge ou court-circuit,
- un premier transformateur de courant (8) disposé exclusivement sur la ligne de courant de phase (L),
- un module d'alimentation (9) connecté avec le premier transformateur de courant (8) et étant configuré pour être alimenté par l'énergie provenant dudit premier transformateur de courant (8) et pour transformer le courant alternatif provenant dudit premier transformateur de courant (8) et fournir au moins une tension de fonctionnement, et étant en outre connecté au déclencheur électronique de protection (6) de sorte à permettre son alimentation, le déclencheur électronique de protection (6) étant configuré pour être alimenté par ledit module d'alimentation (9) à partir de ladite au moins une tension de fonctionnement indépendamment de la tension du réseau,
ledit appareillage de protection est **caractérisé en ce que** :
- ledit au moins un composant électronique de coupure de puissance (5) est configuré pour être piloté seulement par le signal de commande électrique du module de commande (7),
- le module de commande (7) est configuré pour piloter directement ledit au moins un composant électronique de coupure de puissance (5) à partir du signal de commande à condition que le courant d'alimentation entrant dans le module d'alimentation (9) en provenance du premier transformateur de courant (8) soit supérieur ou égal à un courant minimal d'auto alimentation prédéterminé inférieur au courant nominal, de sorte à ouvrir ledit au moins un composant électronique de coupure de puissance (5) et le rendre non-passant en cas d'apparition d'un défaut de type surcharge ou court-circuit.

2. Appareillage de protection à coupure électronique selon la revendication 1 **caractérisé en ce qu'**il comprend en outre un actionneur (10) relié électriquement au module de commande (7), un mécanisme d'isolation galvanique (11) comprenant au moins un premier ensemble de contacts séparables (12) avec un premier contact fixe (13) et un premier contact mobile (14) disposés sur la ligne de courant de phase (L) et **en ce que** l'actionneur (10) est configuré pour actionner l'ouverture du premier ensemble de contacts séparables (12) consécutivement à l'ouverture dudit au moins un composant électronique de coupure (5).

3. Appareillage de protection à coupure électronique selon l'une quelconque des revendications 1 à 2, **caractérisé en ce qu'**il comprend en outre une ligne de courant de neutre (N) entre une première borne de raccordement de neutre (15) et une deuxième borne de raccordement de neutre (16).

4. Appareillage de protection à coupure électronique selon les revendications 2 et 3, **caractérisé en ce que** le mécanisme d'isolation galvanique (11) comprend en outre un deuxième ensemble de contacts séparables (17) avec un deuxième contact fixe (18) et un deuxième contact mobile (19) disposés sur la ligne de courant de neutre (N) et **en ce que** l'actionneur (10) est configuré pour actionner l'ouverture du premier ensemble de contacts séparables (12) et du deuxième ensemble de contacts séparables (17) consécutivement à l'ouverture dudit au moins un composant électronique de coupure (5).

5. Appareillage de protection à coupure électronique selon l'une quelconque des revendications 3 à 4, **caractérisé en ce qu'**il comprend en outre capteur de courant différentiel (20) configuré pour mesurer le courant différentiel circulant entre ladite ligne de courant de phase (L) et la ligne de courant de neutre (N) et pour émettre un signal représentatif de l'image du courant de défaut différentiel entre la ligne de courant de phase (L) et la ligne de courant de neutre (N).

6. Appareillage de protection à coupure électronique selon la revendication 5, **caractérisé en ce que** ledit actionneur (10) est relié électriquement au capteur de courant différentiel (20) et si le courant d'alimentation entrant dans le module d'alimentation (9) est inférieur au courant minimal d'auto alimentation prédéterminé de sorte que le déclencheur électronique de protection (6) n'est pas alimenté suffisamment par le module d'alimentation (9) pour assurer son fonctionnement, l'actionneur (10) est configuré pour traiter ledit signal représentatif de l'image du courant de défaut différentiel et le cas échéant émettre un signal de commande de déclenchement de protection représentatif de l'apparition d'un défaut différentiel pour actionner l'ouverture du premier ensemble de contacts séparables (12) et du deuxième ensemble de contacts séparables (17) en cas d'apparition d'un défaut différentiel.

7. Appareillage de protection à coupure électronique selon les revendications 5 à 6, **caractérisé en ce que** si le courant d'alimentation entrant dans le module d'alimentation (9) est supérieur ou égal au courant minimal d'auto alimentation prédéterminé, le module de commande (7) est configuré pour traiter ledit signal représentatif de l'image du courant de défaut différentiel et le cas échéant émettre un signal de commande différentiel pour piloter directement l'ouverture dudit au moins un composant électronique de coupure de puissance (5) puis consécutivement pour piloter ledit actionneur (10), lequel est configuré pour actionner l'ouverture du premier ensemble de contacts séparables (12) et du deuxième ensemble contacts séparables (17) en cas d'apparition d'un défaut différentiel.

8. Appareillage de protection à coupure électronique selon l'une quelconque des revendications 3 à 7, **caractérisé en ce qu'**il comprend en outre un deuxième transformateur de courant (21) disposé exclusivement sur la ligne de courant de neutre (N) et **en ce que** le module d'alimentation (9) est connecté avec le deuxième transformateur de courant (21) et est configuré pour être alimenté par l'énergie provenant dudit deuxième transformateur de courant (21) et pour transformer le courant alternatif provenant dudit deuxième transformateur de courant (21) et fournir ladite au moins une tension de fonctionnement.

9. Appareillage de protection à coupure électronique selon la revendication 8, **caractérisé en ce que** le module d'alimentation (9) est configuré pour être alimenté exclusivement par l'énergie provenant dudit premier transformateur de courant (8) et dudit deuxième transformateur de courant (21) à partir de ladite au moins une tension de fonctionnement.

10. Appareillage de protection à coupure électronique selon l'une quelconque des revendications 1 à 9, **caractérisé en ce que** le module de commande (7) est configuré pour intégrer à partir du signal représentatif de l'image du courant circulant dans ladite ligne de courant de phase (L) des données représentatives de la mesure du courant circulant dans la ligne de courant de phase (L) à condition que le courant d'alimentation entrant dans le module d'alimentation (9) soit supérieur ou égal au courant minimal d'auto alimentation prédéterminé.

11. Appareillage de protection à coupure électronique selon l'une quelconque des revendications 3 à 10, **caractérisé en ce qu'**il comprend en outre un capteur de tension (22) relié électriquement à la ligne de courant de phase (L) et à la ligne de courant de neutre (N) configuré pour mesurer la tension entre la ligne de courant de phase (L) et la ligne de courant de neutre (N) et émettre un signal représentatif de la tension et **en ce que** le module de commande (7) est configuré pour intégrer à partir du signal représentatif de la tension des données représentatives de la mesure de la tension à condition que le courant d'alimentation entrant dans le module d'alimentation (9) soit supérieur ou égal au courant minimal d'auto-alimentation prédéterminé.

12. Appareillage de protection à coupure électronique selon l'une quelconque des revendications 10 à 11, **caractérisé en ce que** le déclencheur électronique de protection (6) comprend en outre un module de communication (23) configuré pour communiquer de préférence sans fil les données représentatives de la mesure du courant circulant dans la ligne de courant de phase (L) et/ou la mesure de la tension et/ou les mesures de puissance et d'énergie réalisées par la combinaison des mesures de courant et de tension à condition que le courant d'alimentation entrant dans le module d'alimentation (9) soit supérieur ou égal au courant minimal d'auto alimentation prédéterminé.

13. Appareillage de protection à coupure électronique selon l'une quelconque des revendications 1 à 12, **caractérisé en ce que** ledit au moins un composant électronique de coupure de puissance (5) normalement passant comprend au moins un transistor de puissance et préférentiellement au moins un FET et de préférence un JFET.

14. Appareillage de protection à coupure électronique selon l'une quelconque des revendications 1 à 8 et 10 à 13, **caractérisé en ce que** le module d'alimentation (9) est configuré pour être alimenté exclusivement par l'énergie provenant dudit premier transformateur de courant (8).

15. Appareillage de protection à coupure électronique selon l'une quelconque des revendications 1 à 8 et 10 à 13, **caractérisé en ce que** le module d'alimentation (9) est configuré pour être alimenté en outre par l'énergie provenant d'une source d'alimentation auxiliaire de préférence si le courant d'alimentation entrant dans le module d'alimentation (9) en provenance du premier transformateur de courant (8) est inférieur au courant minimal d'auto-alimentation.

16. Appareillage de protection à coupure électronique selon l'une quelconque des revendications 1 à 15, **caractérisé en ce que** le déclencheur électronique de protection (6) est configuré pour être alimenté exclusivement par ledit module d'alimentation (9) indépendamment de la tension du réseau.

17. Appareillage de protection à coupure électronique selon l'une quelconque des revendications 3 à 8 et 10 à 13, **caractérisé en ce que** le module d'alimentation (9) est configuré pour être alimenté en outre par la tension entre la ligne de courant de phase (L) et la ligne de courant de neutre (N) de préférence si le courant d'alimentation entrant dans le module d'alimentation (9) en provenance du premier transformateur de courant (8) est inférieur au courant minimal d'auto-alimentation.
